(19) Europäisches Patentamt
European Patent Office
Office européen des brevets

(11) Numéro de publication : **0 239 475 B1**

# (12) FASCICULE DE BREVET EUROPEEN

(45) Date de publication du fascicule du brevet : **09.01.91 Bulletin 91/02**

(51) Int. Cl.$^5$ : **C08F 4/02,** C08F 4/64, C08F 10/00

(21) Numéro de dépôt : **87400588.7**

(22) Date de dépôt : **17.03.87**

## (54) Support sphérique de catalyseur pour la polymérisation des alpha-oléfines, catalyseurs obtenus à partir de ces supports.

(30) Priorité : **27.03.86 FR 8604413**

(43) Date de publication de la demande : **30.09.87 Bulletin 87/40**

(45) Mention de la délivrance du brevet : **09.01.91 Bulletin 91/02**

(84) Etats contractants désignés : **AT BE CH DE FR GB IT LI LU NL SE**

(56) Documents cités :
**EP-A- 0 099 284**
**EP-A- 0 127 530**
**GB-A- 2 047 255**
**PATENT ABSTRACTS OF JAPAN, vol. 6, no. 244 (C-138)[1122], 2 décembre 1982; & JP-A-57 145 105 (UBE KOSAN K.K.) 08-09-1982**

(73) Titulaire : **ATOCHEM**
**4 & 8, Cours Michelet La Défense 10**
**F-92800 Puteaux (FR)**

(72) Inventeur : **Lacombe, Jean-Loup**
**4, Impasse de Lau**
**F-64140 Lons (FR)**
Inventeur : **Avaro, Michel**
**Domaine de St. Léon 15, Rue de la Grange**
**F-64000 Pau (FR)**
Inventeur : **Brun, Claude**
**Clos St. Pierre**
**F-64320 Idron (FR)**

(74) Mandataire : **Foiret, Claude et al**
**ATOCHEM Département Propriété Industrielle**
**F-92091 Paris la Défense 10 Cédex 42 (FR)**

**EP 0 239 475 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un support sphérique de catalyseur de polymérisation des alpha-oléfines obtenu par réaction d'un composé organique chloré, en présence d'un donneur d'électrons sur un mélange d'un alkylmagnésien et d'un aluminoxane et/ou aluminosiloxane.

Elle concerne également un catalyseur sphérique obtenu à partir de ce support par un second traitement du support par un composé organique chloré avant imprégnation par un halogénure de titane. Le catalyseur obtenu permet de fabriquer facilement des polyoléfines à répartition moléculaire large en présence de cocatalyseur dans la polymérisation ou copolymérisation des alpha-oléfines de formule $CH_2$=CHR dans laquelle R est un atome d'hydrogène ou un radical alkyle contenant de 1 à 6 atomes de carbone.

Dans le FR. 2.529.207 sont décrits des supports sphériques pour la fabrication de catalyseurs de polymérisation des alpha-oléfines. Ces supports sont obtenus par réaction avec un composé organique chloré, en présence nécessairement d'un éther-oxyde, d'un organomagnésien $R_1$ Mg $R_2$,xA1 $(R_3)_3$ où $R_1$, $R_2$, $R_3$, sont des radicaux alkyles.

Ce mode de préparation du support permet l'obtention de catalyseur dont les polymères fabriqués en sa présence possédent une répartition de masse moléculaire étroite ou faiblement dispersée.

Selon l'invention le support sphérique de catalyseur est préparé par réaction d'un composé organique chloré, en présence d'un donneur d'électrons, avec un mélange d'un alkylmagnésien et d'un composé organique de l'aluminium caractérisée en ce que le composé organique chloré associé à un donneur d'électrons est mis à réagir dans le mélange préalable d'alkylmagnésien, d'aluminoxane et/ou d'aluminosiloxane, et éventuellement de donneur d'électrons.

Ce support tel que décrit, imprégné des éléments catalytiques actifs, de par la présence de l'aluminoxane et/ou de l'aluminosiloxane, influence déjà à lui seul la répartition moléculaire du polymère finalement obtenu en présence de ce catalyseur. Toutefois une nouvelle activation du support par un composé chloré permet d'obtenir un catalyseur dont la morphologie du support reste intacte et la productivité est améliorée. Il permet en outre d'augmenter la masse volumique apparente du polymère final.

De façon plus détaillée l'alkylmagnésien est préalablement mélangé à l'aluminoxane et/ou l'aluminosiloxane, de préférence en solution dans un solvant inerte tel qu'un hydrocarbure comme l'hexane, en présence éventuellement d'un donneur d'électrons. Une fois réalisé le mélange, on fait réagir le composé organique chloré dilué dans un donneur d'électrons. A la fin de la réaction, le support sphérique formé, en suspension dans le milieu réactionnel, est filtré, lavé avec un liquide inerte, puis finalement séché. On obtient ainsi un support sphérique possédant une surface spécifique comprise entre 1 et 100 $m^2/g$ et dont le diamètre moyen des particules est compris entre 5 et 100 μm et plus généralement entre 10 et 50. La largeur de répartition granulométrique des supports, et par conséquent des catalyseurs ultérieurs est très étroite, en général inférieure à 5. Cette largeur de répartition granulométrique est caractérisée par le rapport des diamètres à 95% sur 5% : diamètres pris sur la courbe de répartition granulométrique donnée en pourcentage cumulé en fonction des diamètres croissants des particules.

L'alkylmagnésien mis en oeuvre répond à la formule $R_1$ Mg $R_2$ dans laquelle $R_1$ et $R_2$ sont des radicaux alkyle possédant de 1 à 12 atomes de carbone.

L'aluminoxane pouvant entrer dans la composition du support est choisi parmi les produits répondant à la formule :

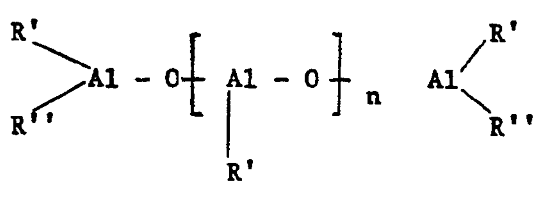

dans laquelle R' est un radical alkyle possédant de 1 à 16 atomes de carbone, les R" formant ensemble un radical –0– ou représentant chacun un radical R', et, n étant un nombre entier de 0 à 20.

L'aluminosiloxane pouvant entrer dans la composition du support est choisi parmi les produits répondant à la formule :

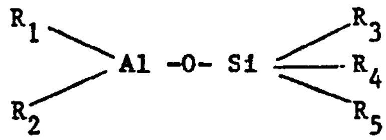

dans laquelle $R_1$, $R_2$, $R_3$, $R_4$, $R_5$, identiques ou différents, représentent un radical alkyle possédant de 1 à 12 atomes, et mieux, de 1 à 6 atomes de carbone, ou encore l'hydrogène sachant que de préférence il n'y a pas plus de trois atomes d'hydrogène par mole de dérivé, ou enfin du chlore sachant que de préférence il n'y a pas plus de trois moles de chlore par mole de dérivé.

Le composé organique chloré, servant d'agent chlorant du dérivé de l'alkylmagnésien du composé de l'aluminium, est choisi parmi les chlorures d'alkyle dans lesquels le radical alkyle est primaire, secondaire ou tertiaire, parmi les polyhalogénures d'alkyle ou encore parmi les chlorures d'acide.

Les composés préférés sont le chlorure de tertiobutyle, le chlorure de n-butyle, le dichloréthane, le chlorure de thionyle, le chlorure de benzoyle.

L'agent chlorant du mélange de l'alkylmagnésien et du composé organique de l'aluminium est associé à au moins un donneur d'électrons choisi parmi les éthers aliphatiques ou cycliques parmi lesquels on peut citer l'éther diisoamylique, l'éther sec-butylique.

Le donneur d'électrons associé éventuellement au mélange de l'alkylmagnésien et du composé organique de l'aluminium est de préférence identique au donneur d'électrons associé à l'agent chlorant. Toutefois il n'est pas exclu d'associer à ce mélange tout composé connu comme donneur d'électrons. Il est avantageusement choisi parmi les acides carboxyliques aliphatiques ou aromatiques et leurs esters alcoyliques, les éthers aliphatiques ou cycliques, les cétones, les esters vinyliques, les dérivés acryliques, en particulier acrylates ou méthacrylates d'alcoyle, et les silanes. Conviennent notamment comme donneurs d'électrons les composés tels que paratoluate de méthyle, benzoate d'éthyle, acétate d'éthyle ou de butyle, éther éthylique, para-anisate d'éthyle, dibutylphtalate, dioctyphtalate, diisobutyphtalate, tétrahydrofuranne, dioxane, acétone, méthylisobutylcétone, acétate de vinyle, méthacrylate de méthyle, et phényltriéthoxysilane. Les esters peuvent également être utilisés sous forme de produits d'addition avec des halogènures d'acides de Lewis différents des dihalogénures de magnésium.

Afin de bien contrôler la morphologie du support final, il est important d'associer les composants les uns aux autres en quantité appropriées.

C'est ainsi que le rapport molaire Mg/Al recommandé est compris entre : 5 et 200 et mieux entre 10 et 80. De même une concentration insuffisante de composé organique chloré lors de la première chloration ne permet pas d'atteindre un degré de chloration suffisant du dérivé organomagnésien ce qui conduit à un support contenant une quantité trop importante de composés organiques. La concentration en chlore à mettre en oeuvre dans cette étape est de préférence telle que le rapport molaire Cl/Mg est compris entre 2 et 4.

La quantité de donneur d'électrons à mettre en oeuvre peut être telle que le rapport molaire de la totalité du donneur d'électrons sur le magnésium est compris entre 0,01 et 5 sachant que le rapport d'éther aliphatique ou cyclique sur magnésium est au minimum de 0,01.

Les supports obtenus selon l'invention sont particulièrement adaptés à la fabrication des catalyseurs, Ziégler-Natta, de polymérisation des alpha-oléfines à base d'halogénure de métal de transition tel que Cr, V, Zr et mieux Ti. Ces catalyseurs résultent de façon générale de l'imprégnation d'un support $MgCl_2$ par, par exemple, $TiCl_4$.

Comme déjà signalé, préalablement à l'imprégnation par l'halogénure de métal de transition, le support subit une nouvelle activation par un second traitement par un composé chloré. Pour ce faire le support est remis en suspension, éventuellement dans un liquide inerte tel qu'un hydrocarbure si le composé chloré est insuffisamment fluide, puis mis à nouveau au contact d'un composé chloré de façon à assurer la chloration totale du support et en particulier des liaisons métal-carbone. La qualité de cette chloration peut être suivie par l'hydrolyse du support résultant. S'agissant d'une surchloration du support la quantité d'halogène à mettre en oeuvre importe peu, tout excés pouvant ultérieurement être éliminé par un éventuel lavage.

Le composé chloré mis en oeuvre dans cette étape est identique ou différent de celui précédemment utilisé. Dans ce cas ce peut être non seulement un composé organique mais encore un composé inorganique halogéné. Ce peut être par exemple : HCl, un hydrocarbure halogéné tel $CCl_4$, ou encore $SiCl_4$, $SOCl_2$.

Cette étape achevée, le support, après éventuellement filtration, lavage et léger séchage, est imprégné de l'halogénure de métal de transition plus particulièrement de formule $Ti(OR)_x x_{4-x}$ où R est un radical alkyl de 1 à 12 atomes de carbone et X un halogène, et, de préférence $TiCl_4$. L'imprégnation peut se faire de façon classique en additionnant au support une quantité suffisante d'halogénure de métal de transition

éventuellement dans un solvant inerte pour former une suspension homogène. En général le maintien en suspension sous agitation pendant environ quelques heures à une température inférieure à 150°C suffit à imprégner le support d'halogénure de métal de transition. Le catalyseur est alors filtré et lavé avec un liquide inerte jusqu'à élimination dans le liquide de toute trace d'halogénure. Il n'est pas exclu à ce stade d'effectuer une seconde imprégnation d'halogénure de métal de transition, suivie d'une filtration et lavage, pour modifier la cinétique du catalyseur et les propriétés physicochimiques des polymères résultant.

Les conditions de polymérisation des alpha-oléfines avec les catalyseurs selon l'invention sont celles déjà connues de l'art antérieur. La polymérisation peut-être conduite soit en phase liquide en présence ou non d'un hydrocarbure solvant inerte, comme l'hexane ou l'heptane, soit en phase gazeuse. La température de la polymérisation est en général comprise entre 40 et 150°C et en particulier entre 50 et 90°C. La polymérisation peut encore être conduite en masse sous des pressions de 100 à 1300 bars entre 130 et 350°C.

Les polymères obtenus avec ces catalyseurs se présentent sous forme de particules sphériques ce qui leur confère une caractéristique d'écoulement élevé.

Les essais de l'exemple suivant illustrent l'invention sans toutefois la limiter.

## EXEMPLE 1

### A. PREPARATION DU SUPPORT

On opère dans un réacteur en verre de 1 litre purgé à l'azote, équipé d'un dispositif d'agitation et de régulation de température. Dans ce réacteur, sous balayage constant d'azote sont introduits un composé alkylmagnésien, l'aluminoxane ou l'aluminosiloxane, un premier donneur d'électrons, de l'hexane séché en quantité suffisante pour compléter au volume désiré c'est-à-dire à une concentration en Mg de 0,5 mole par litre. Cette solution est maintenue sous agitation à 50°C pendant environ 16 heures.

Un mélange de donneur d'électrons et de chlorure de tertiobutyle est injecté lentement au moyen d'une seringue montée sur perfuseur. L'injection terminée l'agitation et la température sont maintenues pendant 3 heures.

Le milieu réactionnel est filtré à température ambiante. Après quelques lavages à l'héxane la poudre récupérée peut être éventuellement séchée sous courant d'azote à 60°C (tableau A).

### B. PREPARATION DU CATALYSEUR

On opère dans un réacteur en verre de 500 ml. équipé d'un dispositif d'agitation et de régulation de température. Dans ce réacteur purgé et sous constant balayage d'azote sont introduits le support puis, soit de l'hexane, séché et dégazé à l'azote, de façon à former une bouillie agitée lentement dans laquelle on fait barboter HCl anhydre pendant 30 minutes à température ambiante, soit un agent chlorant liquide dans lequel le support reste en suspension pendant une heure à 50°C.

Le support traité est filtré, lavé à l'hexane sec et dégazé légérement séché. Il est ensuite remis en suspension homogène dans du $TiCl_4$ sous une agitation qui tout en restant faible doit être efficace. L'imprégnation s'effectue à une température de 60–90°C pendant 2 heures. Le milieu réactionnel est ensuite filtré à chaud ; le catalyseur retenu est lavé à température ambiante par de l'hexane jusqu'à élimination de toute trace de $TiCl_4$ dans le liquide de lavage. Le catalyseur peut être séché à environ 60°C puis stocké en atmosphère inerte ou maintenu en suspension dans un hydrocarbure inerte (tableau B).

### C. POLYMERISATION DE L'ETHYLENE

On opère dans un réacteur en inox de 5 litres muni d'un agitateur tournant à 500 t./min., et d'un moyen de régulation de température.

Dans le réacteur purgé à l'azote sont introduits sous balayage d'hydrogène et à température ambiante 1000 ml. d'hexane et le cocatalyseur.

Puis on injecte successivement dans le réacteur 4,6 bars d'hydrogène, 6,4 bars d'éthylène puis 20 à 30 mg de catalyseur en suspension dans l'hexane. La température du milieu est montée à 80°C, la pression étant maintenue constante par apport continu d'éthylène. Après 1 heure 30 de réaction la polymérisation est arrêtée par addition de méthanol et HCl. On récupère le polymère que l'on sèche (tableau C).

Les tableaux suivants illustrent ces différentes étapes.

TABLEAU A - SUPPORT CATALYTIQUE

| ESSAI | ALKYLMAGNESIUM | | COMPOSES D' ALUMINIUM | | 1er DONNEUR D' ELECTRONS | | AGENT CHLORANT | | DONNEURS ELECTRONS DE L'AGENT CHLORANT | | AGITATION |
|---|---|---|---|---|---|---|---|---|---|---|---|
| | Nature | M/litre | Nature | Mg/Al | Nature | M/1 | Nature | Cl/Mg molaire | Nature | M/l. | T/min. |
| 1 | DBM | 0,5 | TiBAO | 20 | EDSB | 0,03 | TBuCl | 3,0 | EDSB | 0,27 | 700 |
| 2 | DBM | 0,5 | TiBAO | 20 | EDSB | 0,03 | TBuCl | 3,0 | EDSB | 0,27 | 500 |
| 3 | DBM | 0,5 | TiBAO | 20 | EDSB | 0,03 | TBuCl | 3,0 | EDSB | 0,27 | 700 |
| 4 | DBM | 0,5 | TiBAO | 10 | EDSB | 0,03 | TBuCl | 3,0 | EDSB | 0,27 | 700 |
| 5 | DBM | 0,5 | Siloxal-H1 | 20 | EDSB | 0,03 | TBuCl | 3,0 | EDSB | 0,27 | 700 |
| 6 | DBM | 0,5 | Siloxal | 20 | EDSB | 0,03 | TBuCl | 3,0 | EDSB | 0,27 | 700 |
| 7 comparatif | DBM | 0,5 | TEA | 20 | EDSB | 0,03 | TBuCl | 3,0 | EDSB | 0,27 | 700 |

TiBAO = Tétraisobutylaluminoxane

EDSB = Ether di,sec-butylique

TBuCl = Chlorure de tertiobutyle

TEA = Triéthylaluminium

Siloxal H-1 (Schering) :

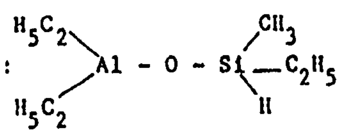

Siloxal (Schering) :

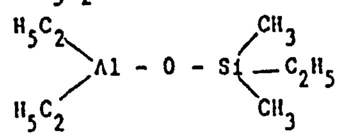

TABLEAU B - CATALYSEUR

| | SUPPORT MIS EN OEUVRE | AGENT CHLORANT | COMPOSE DE METAL DE TRANSITION | EN % POIDS Analyse du catalyseur | | |
|---|---|---|---|---|---|---|
| | | | | Mg % | Ti % | Al % |
| Catalyseur 1 | Essai 1 | HCl | $TiCl_4$ | 21 | 2,9 | 0,2 |
| Catalyseur 2 | Essai 2 | HCl | $TiCl_4$ | 19 | 2,1 | 0,2 |
| Catalyseur 3 | Essai 3 | DCE | $TiCl_4$ | 25 | 4,0 | 0,5 |
| Catalyseur 4 | Essai 1 | TBuCl | $TiCl_4$ | 27 | 6,0 | 0,6 |
| Catalyseur 5 | Essai 4 | HCl | $TiCl_4$ | 19 | 1,8 | 0,3 |
| Catalyseur 6 | Essai 5 | HCl | $TiCl_4$ | 23 | 1,5 | 0,1 |
| Catalyseur 7 | Essai 6 | HCl | $TiCl_4$ | 20 | 1,4 | 0,4 |
| Catalyseur 8 comparatif | Essai 7 | HCl | $TiCl_4$ | 23 | 1,4 | 0,3 |
| Catalyseur 9 comparatif | Essai 1 | – | $TiCl_4$ | 20 | 5 | 0,1 |
| Catalyseur 10 comparatif | Essai 7 | – | $TiCl_4$ | 22 | 1,2 | 0,2 |

DCE = Dichloréthane

TABLEAU C - POLYMERISATION DE L'ETHYLENE

| POLYMERISATION | CATALYSEUR mis en oeuvre | COCATALYSEUR | | ACTIVITE g PE/g cata/h | CARACTERISTIQUES DU POLYMERE | | | | ∅ 50 µm |
|---|---|---|---|---|---|---|---|---|---|
| | | Nature | mM/l | | Densité | $MI_2$ | $MI_{21}/MI_2$ | MVA | |
| 1 | catalyseur 1 | TIBA | 6 | 9000 | 0,959 | 1,2 | 46 | 0,45 | 550 |
| 2 | catalyseur 2 | TIBA | 6 | 8000 | 0,957 | 1,2 | 49 | 0,43 | 580 |
| 3 | catalyseur 3 | TIBA | 6 | 8500 | 0,958 | 3,7 | 50 | 0,35 | 420 |
| 4 | catalyseur 4 | TIBA | 6 | 8000 | 0,958 | 1,4 | 56 | 0,36 | 500 |
| 5 | catalyseur 6 | TIBA | 6 | 8000 | 0,959 | 3,8 | 49 | 0,40 | |
| 6 | catalyseur 8 | TIBA | 6 | 6000 | 0,959 | 2,5 | 40 | 0,39 | 320 |
| 7 | comparatif catalyseur 9 | TIBA | 6 | 1800 | 0,958 | 2,5 | 55 | 0,30 | 390 |
| 8 | comparatif catalyseur 10 | TIBA | 6 | 7000 | 0,958 | 0,3 | 45 | 0,35 | 350 |
| 9 | comparatif catalyseur 5 | TIBA | 6 | 7200 | 0,958 | 4,2 | 44 | 0,33 | |
| 10 | catalyseur 7 | TIBA | 6 | 6500 | 0,959 | 5,5 | 48 | 0,31 | |

TIBA = Triisobutylaluminium
$MI_2$ = Indice de fluidité sous 2 kg (Melt Index)
$MI_{21}/MI_2$ = Indice de fluidité sous 21 kg sur indice de fluidité sous 2 kg
MVA = Masse volumique apparente
∅ 50 = Diamètre moyen des particules de polymère.

EXEMPLE 2

Dans un réacteur de 8,2 l. sec et dégazé à l'azote on introduit sous azote et sous agitation de 350 tours/minute successivement à 40°C :

3 l. d'hexane sec

10,5 mM de triisobutylaluminium (TIBA) dilué dans l'hexane à 2,1 M/l

0,93 g de catalyseur 4 de l'exemple 1
0,5 bar absolu d'hydrogène
3 bars absolus d'azote

Après 5 minutes d'homogénéisation on introduit de l'éthylène à un débit de 10 l/h pendant 30 minutes puis de 65 l/h pendant 2 heures.

On arrête l'introduction d'éthylène, la pression totale chute. Le réacteur est dégazé à l'azote sous agitation réduite de 150 tours/minute.

La température est portée à 60°C. L'hexane est éliminé par balayage d'azote. Après évaporation complète du solvant on recueille 164 g de prépolymère à morphologie sphérique sans agrégats, de degré de prépolymérisation de 176 g de prépolymère par gramme de catalyseur et de masse voluminque apparente (MVA) de 0,302.

Copolymérisation en phase gazeuse de l'éthylène-butène-I

On opère dans un réacteur de 8,2 l préalablement séché, muni d'un agitateur tournant à une vitesse de 400 tours/minute et maintenu à 85°C pendant toute la polymérisation.

Dans le réacteur maintenu sous pression réduite de 1,33 Pa, en présence de 100 g de polyéthylène de fond de cuve, on injecte :

– 1 bar absolu de butène-I
– un mélange à effet sphéroprotecteur de : 0,4 mM de TIBA dilué à 2,1 M/l d'hexane et de 0,027 mM de phényltriéthoxysilane (PTES)
– 1,5 bar absolu de butène-I – 2 bars absolus d'hydrogène – 13,5 bars d'éthylène

On introduit alors dans le réacteur 10 g du prépolymère actif précédent sur lequel on imprègne le mélange de 0,4 mM de TIBA dilué à 2,1 M/l dans l'hexane et de 0,027 mM de PTES. Cette introduction de prépolymère est effectuée par poussée avec l'azote jusqu'à ce que la pression totale à l'intérieur du réacteur atteigne 21 bars absolus. On maintient la pression dans le réacteur à cette valeur par injection d'éthylène et de butène-I dans un rapport molaire butène-I/éthylène de 0,0466.

Après 4 heures de polymérisation, le réacteur est dégazé et refroidi.

On recueille 928 g de copolymère de morphologie sphérique, charge initiale déduite. La productivité est de 16.332 g de polyéthylène par g de catalyseur.

Les caractéristiques du copolymère sont :

$$MI_2 = 0,6$$
$$\text{Densité} = 0,924$$
$$Ø50 = 840 \text{ microns}$$
$$MVA = 0,462 \text{ g/cm}^3$$

## Revendications

1. Support sphérique de catalyseur pour la polymérisation des alpha-oléfines fabriqué par réaction d'un composé organique chloré, en présence d'un donneur d'électrons et d'un mélange d'un alkylmagnésien et d'un composé organique de l'aluminium caractérisé en ce que le composé organique chloré, associé à un donneur d'électrons, est mis à réagir dans le mélange préalable d'alkylmagnésien, d'aluminoxane et/ou d'aluminosiloxane et éventuellement de donneurs d'électrons et en ce que, après avoir isolé le support formé, il est soumis à une nouvelle activation en suspension par un composé chloré.

2. Catalyseur de polymérisation des alpha-oléfines obtenu par imprégnation d'un halogénure de métal de transition du support selon la revendication 1.

3. Procédé de fabrication d'un support sphérique de catalyseur pour la polymérisation des alpha-oléfines par réaction d'un composé organique chloré, en présence d'un donneur d'électrons, et d'un mélange d'un alkylmagnésien et d'un composé organique de l'aluminium caractérisé en ce que sur un mélange d'aluminoxane et/ou d'aluminosiloxane, d'alkylmagnésien, et éventuellement d'un donneur d'électrons, on fait réagir le composé organique chloré dilué dans un donneur d'électrons et en ce qu'après réaction du composé organique chloré le support après filtration et lavage, et éventuellement séchage, est remis en suspension dans un milieu contenant un composé chloré de façon à lui faire subir une nouvelle activation.

4. Procédé selon la revendication 3 caractérisé en ce que le composé organique d'aluminium et l'alkylmagnésien sont mis en oeuvre dans le rapport molaire Mg/Al compris entre 5 et 200.

5. Procédé selon l'une des revendications 3 ou 4 caractérisé en ce que la quantité de donneur d'électrons mise en oeuvre est telle que le rapport molaire de la totalité du donneur d'électrons sur le magnésium est compris entre 0, 01 et 5 sachant que le rapport molaire d'éther aliphatique ou cyclique sur le magnésium est au minimum de 0,01.

6. Procédé selon l'une des revendications 3 à 5 caractérisé en ce que la quantité de composé organique chloré mise en oeuvre dans la première chloration du mélange de composé organique d'aluminium et d'alkylmagnésien, calculée en rapport molaire Cl/Mg, est comprise entre 2 et 4.

7. Procédé de fabrication d'un catalyseur de polymérisation des alpha-oléfines caractérisé en ce qu'on imprègne d'un halogénure de métal de transition un support obtenu selon l'une des revendications 3 à 6.

8. Procédé selon la revendication 7 caractérisé en ce que le support est imprégné d'halogénure de titane.

## Ansprüche

1. Kugelförmiger Katalysatorträger zur Polymerisation von alpha-Olefinen, hergestellt durch Umsetzung einer organischen Chlorverbindung in Gegenwart eines Elektronendonators und eines Gemisches aus einem Alkylmagnesium und einer organischen Aluminiumverbindung, dadurch gekennzeichnet, daß die organische, an einen Elektronendonator gebundene Chlorverbindung mit dem zuvor hergestellten Gemisch aus Alkylmagnesium, Aluminiumoxan und/oder Aluminiumsiloxan und gegebenenfalls Elektronendonatoren zur Umsetzung gebracht und daß nach Isolierung des gebildeten Trägers dieser einer erneuten Aktivierung durch eine Chlorverbindung in Suspension unterworfen wird.

2. Polymerisationskatalysator für alpha-Olefine, der durch Imprägnierung des Trägers nach Anspruch 1 mit einem Übergangsmetallhalogenid hergestellt ist.

3. Verfahren zur Herstellung eines kugelförmigen Katalysatorträgers zur Polymerisation von alpha-Olefinen durch Umsetzung einer organischen Chlorverbindung in Gegenwart eines Elektronendonators und eines Gemisches aus einem Alkylmagnesium und einer organischen Aluminiumverbindung, dadurch gekennzeichnet, daß man mit dem Gemisch aus Aluminiumoxan und/oder Aluminiumsiloxan, Alkylmagnesium und gegebenenfalls einem Elektronendonator die organische, in einem Elektronendonator verdünnte Chlorverbindung umsetzt und daß nach der Umsetzung der organischen Chlorverbindung der Träger nach Filtration und Waschen und gegebenenfalls Trocknen wieder in Suspension in einem, eine Chlorverbindung enthaltenden Milieu gebracht wird, um ihn einer erneuten Aktivierung zu unterziehen.

4.Verfahren nach Anspruch 3, dadurch gekennzeichnet, daß die organische Aluminiumverbindung und das Alkylmagnesium in einem Molverhältnis Mg/Al zwischen 5 und 200 eingesetzt werden.

5.Verfahren nach Anspruch 3 oder 4, dadurch gekennzeichnet, daß die eingesetzte Elektronendonatormenge so ist, daß das Molverhältnis des gesamten Elektronendonators zum Magnesium zwischen 0,01 und 5 beträgt, da das Molverhältnis von aliphatischen oder cyclischen Ether zu Magnesium mindestens 0,01 ist.

6.Verfahren nach einem der Ansprüche 3 bis 5, dadurch gekennzeichnet, daß die Menge der organischen Chlorverbindung, die in der ersten Chlorierung des Gemisches aus organischer Aluminiumverbindung und Alkylmagnesium eingesetzt wird, berechnet als Molverhältnis Cl/Mg, zwischen 2 und 4 beträgt.

7.Verfahren zur Herstellung eines Polymerisationskatalysators für alpha-Olefine, dadurch gekennzeichnet, daß man einen nach einem der Ansprüche 3 bis 6 hergestellten Träger mit einem Übergangsmetallhalogenid imprägniert.

8.Verfahren nach Anspruch 7, dadurch gekennzeichnet, daß der Träger mit Titanhalogenid imprägniert ist.

## Claims

1. A spherical catalyst support for the polymerization of alpha olefins, produced by reacting a chlorinated organic compound in the presence of an electron donor and a mixture of an alkylmagnesium and an organic compound of aluminium, characterized in that the chlorinated organic compound associated with an electron donor is introduced for reaction into the preliminary mixture of alkylmagnesium, aluminoxane and/or aluminosiloxane and if necessary electron donors, and after the support formed has been isolated, it is subjected to a further activation in suspension by a chlorinated compound.

2. A catalyst for the polymerization of alpha olefins, obtained by impregnation of a transition metal halide of the support according to claim 1.

3. A process for the preparation of a spherical catalyst support for the polymerization of alpha olefins by reacting a chlorinated organic compound in the presence of an electron donor and a mixture of an alkylmagnesium and an organic compound of aluminium, characterized in that the chlorinated organic component diluted in an electron donor is reacted on a mixture of aluminoxane and/or aluminosiloxane, alkylmagnesium and if necessary an electron donor, and after the reaction of the chlorinated organic compound, the support, after filtration and washing, and if necessary drying, is so resuspended in a medium containing a chlorinated compound as to cause the support to undergo a fresh activation.

4. A process according to claim 3, characterized in that the organic aluminium compound and the alkylmagnesium are used in a Mg/Al molar ratio of between 5 and 200.

5. A process according to one of claims 3 or 4, characterized in that the quantity of electron donor used is such that the molar ratio between the totality of the electron donor and magnesium is between 0.01 and 5, while the molar ratio between aliphatic or cyclic ether and magnesium is at least 0.01.

6. A process according to one of claims 3 to 5, characterized in that the quantity of chlorinated organic compound used in the first chlorination of the mixture of organic aluminium compound and alkyl magnesium, calculated in Cl/Mg molar ratio, is between 2 and 4.

7. A process for the preparation of a catalyst for the polymerization of alpha olefins, characterized in that a support obtained according to one of claims 3 to 6 is impregnated with a transition metal halide.

8. A process according to claim 7, characterized in that the support is impregnated with titanium halide.